# EUROPEAN PATENT APPLICATION

(11) **EP 4 470 744 A1**
(43) Date of publication of application: **04.12.2024**
(21) Application number: 22923990.0
(22) Date of filing: 21.09.2022
(51) Int. Cl.: B29C 45/18

(54) **INJECTION MOLDING MACHINE AND MATERIAL SUPPLY DEVICE**

(30) Priority: 25.01.2022 JP 2022009354
(71) Applicant: The Japan Steel Works, Ltd., Tokyo 141-0032 (JP)
(72) Inventor: BUTANI, Michio, Tokyo 141-0032 (JP)
(74) Representative: Simmons & Simmons LLP (Munich)
(86) International application number: PCT/JP2022/035240
(87) International publication number: WO 2023/145131

(57) **Abstract**

This injection molding machine 1 includes: a cylinder 11; a hopper 14 which is attached to the cylinder 11 and is for supplying a molding material into the cylinder 11; and a material supply device 4 for supplying the molding material to the hopper 14. A tank 31 of the material supply device 4 is connected to the hopper 14 through a hose 54. The material supply device 4 is connected, through a hose 51, to a container 57 in which the molding material is stored. It is possible to convey the molding material from the container 57 through the hose 51 to the material supply device 4 and to convey the molding material from a tank 30 of the material supply device 4 through the hose 54 to the hopper 14.

## Description

### TECHNICAL FIELD

The present invention relates to an injection molding machine and a material supply apparatus.

### BACKGROUND ART

Japanese Unexamined Patent Application Publication No. 2002-66712 (Patent Document 1) describes a technique related to a metal injection molding machine using alloy chips as a molding material.

### RELATED ART DOCUMENTS

### PATENT DOCUMENTS

Patent Document 1: Japanese Unexamined Patent Application Publication No. 2002-66712

### SUMMARY OF THE INVENTION

### PROBLEMS TO BE SOLVED BY THE INVENTION

An injection molding machine configured to form molded products with a desired shape has been known. A typical injection molding machine is made up of an injection apparatus and a mold clamping apparatus. The injection apparatus melts a molding material and supplies the molten molding material to the mold clamping apparatus.

The injection apparatus includes a cylinder with a built-in screw and a hopper to supply a molding material to the cylinder. When a molding material is supplied from the hopper into the cylinder, the amount of molding material in the hopper decreases. Therefore, it is necessary to supply the molding material to the hopper of the injection apparatus. When supplying a molding material stored in a container to a hopper of an injection apparatus, the molding material needs to be transported from the container to the hopper of the injection apparatus. However, if a problem occurs in this transport, it may become necessary to put the injection molding machine into a standby state. This reduces the operating rate of the injection molding machine and decreases the throughput of molded products manufactured using the injection molding machine.

Other problems and novel features will be apparent from the descriptions of this specification and accompanying drawings.

### MEANS FOR SOLVING THE PROBLEM

According to one embodiment, an injection molding machine includes a cylinder, a first hopper attached to the cylinder and configured to supply a molding material into the cylinder, and a material supply apparatus configured to supply the molding material to the first hopper. The material supply apparatus includes a first container configured to store the molding material, and the first container of the material supply apparatus is connected to the first hopper via a first tubular member. The material supply apparatus is connected to a second container configured to store the molding material via a second tubular member. Then, the molding material can be transported from the second container to the material supply apparatus through the second tubular member, and the molding material can be transported from the first container of the material supply apparatus to the first hopper through the first tubular member.

### EFFECTS OF INVENTION

According to one embodiment, it is possible to improve the throughput of molded products manufactured using the injection molding machine.

### BRIEF DESCRIPTIONS OF THE DRAWINGS

FIG. 1 is a schematic diagram showing a general configuration of an injection molding machine according to an embodiment.
FIG. 2 is a side view of a material supply apparatus according to the embodiment.
FIG. 3 is a cross-sectional view of the material supply apparatus according to the embodiment.
FIG. 4 is a partially enlarged cross-sectional view showing a part of the material supply apparatus shown in FIG. 3 in an enlarged manner.
FIG. 5 is a cross-sectional view of a container in which a molding material is stored.
FIG. 6 is a partially enlarged cross-sectional view showing a part of a hopper of an injection apparatus in an enlarged manner.
FIG. 7 is an explanatory diagram for an operation of the material supply apparatus.
FIG. 8 is an explanatory diagram for an operation of the material supply apparatus.
FIG. 9 is a table for describing an example of an automatic control of the material supply apparatus.
FIG. 10 is an explanatory diagram showing a state in the container in which the molding material is stored.
FIG. 11 is an explanatory diagram showing a state in the container in which the molding material is stored.
FIG. 12 is a schematic diagram showing a general configuration of an injection molding machine according to a studied example.
FIG. 13 is a schematic diagram showing a general configuration of an injection molding machine according to another embodiment.

### DETAILED DESCRIPTION OF PREFERRED EMBODIMENTS

Hereinafter, embodiments will be described in detail with reference to drawings. Note that the members having the same function are denoted by the same reference characters throughout the drawings for describing the embodiments, and the repetitive description thereof will be omitted. Further, in the following embodiments, the description of the same or similar part will not be repeated in principle unless particularly required.

### (First Embodiment)

### <Configuration of Injection Molding Machine>

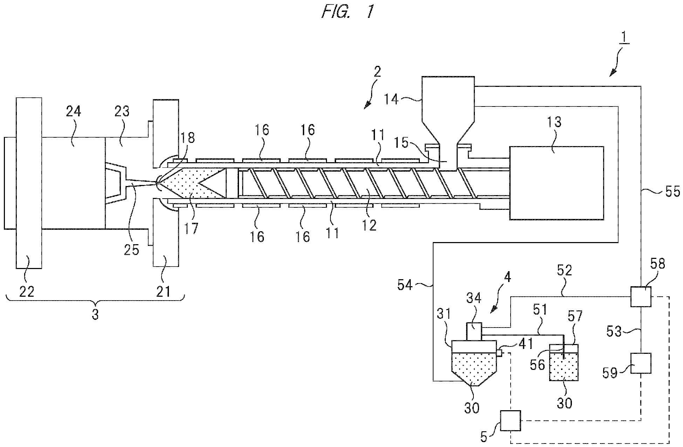

FIG. 1 is a schematic diagram showing a general configuration of an injection molding machine 1 according to the present embodiment. The injection molding machine 1 shown in FIG. 1 is made up of an injection apparatus 2, a mold clamping apparatus 3, and a material supply apparatus 4.

### <Configuration of Injection Apparatus>

First, a general configuration of the injection apparatus 2 will be described with reference to FIG. 1. The injection apparatus 2 shown in FIG. 1 includes a cylinder 11, a screw 12 rotatably disposed in the cylinder 11, a driving mechanism 13 for driving the screw 12 in the cylinder 11, and a hopper (molding material feeder, molding material supplying unit) 14 disposed on a rear end side of the cylinder 11. The hopper 14 is connected to an opening (material supply port) 15 in an upper surface of the cylinder 11, and it is possible to supply a molding material (raw material for manufacturing molded products) from the hopper 14 into the cylinder 11. A heating mechanism such as a heater 16 is provided in the cylinder 11 or around the cylinder 11.

### <Configuration of Mold Clamping Apparatus>

Next, a general configuration of the mold clamping apparatus 3 will be described with reference to FIG. 1. The mold clamping apparatus 3 shown in FIG. 1 includes a fixed platen 21, a movable platen 22, and a mold clamping mechanism (not shown) for moving the movable platen 22. Therefore, the mold clamping apparatus 3 can variably control the distance between the movable platen 22 and the fixed platen 21. A mold 23 and a mold 24 can be disposed between the movable platen 22 and the fixed platen 21. The mold 23 is attached to the fixed platen 21 and the mold 24 is attached to the movable platen 22. Therefore, the mold 24 attached to the movable platen 22 can move together with the movable platen 22. The mold clamping mechanism (not shown) can move the mold 24 attached to the movable platen 22 forward and backward with respect to the mold 23 attached to the fixed platen 21. When the mold 24 moves forward and comes in contact with the mold 23, the molds 23 and 24 are in a "mold closed" state, and when the mold 24 moves backward and comes out of contact with the mold 23, the molds 23 and 24 are in a "mold open" state. When the molds 23 and 24 are in the mold closed state, a cavity 25 is formed between the mold 23 and the mold 24. The cavity 25 is a space for molding. A tip end of the cylinder 11 of the injection apparatus 2 is connected to the fixed platen 21 of the mold clamping apparatus 3. Specifically, the tip end of the cylinder 11 is connected to the fixed platen 21 via a nozzle 18. A molded product is formed by injecting the molten molding material into the cavity 25 of the mold 23 and the mold 24 through the nozzle 18 from the cylinder 11 of the injection apparatus 2.

### <Operation of Injection Molding Machine>

Next, a general operation of the injection molding machine 1 shown in FIG. 1 will be described.

A molding material is stored in the hopper 14 of the injection apparatus 2, and a predetermined amount of molding material is supplied (fed) into the cylinder 11 through the opening 15 from the hopper 14. The molding material supplied from the hopper 14 to the cylinder 11 is a solid material in the form of chips. As the molding material, for example, metal chips such as magnesium (Mg) chips can be used. The molding material supplied from the hopper 14 to the cylinder 11 is melted while being sent forward by the rotation of the screw 12 in the cylinder 11. The molding material can be melted by heating using a heating mechanism such as the heater 16 or by a shear force caused by the rotation of the screw 12. In the following, the molten molding material is referred to as a "molten material" hereinafter. The molten material may also be in a semi-molten state.

The molten material sent forward in the cylinder 11 is stored in the tip end (reservoir 17) of the cylinder 11, and the screw 12 moves backward due to the reaction thereof. From another perspective, the molten material is stored in the reservoir 17 formed at the tip end of the cylinder 11 by the backward movement of the screw 12. As a result, an amount of molten material required for injection is stored in the reservoir 17. This state corresponds to FIG. 1, and the molten material stored in the reservoir 17 is indicated with dotted hatching in FIG. 1.

Then, the screw 12 is moved forward in the cylinder 11 without rotating. In this way, the molten material stored in the reservoir 17 of the cylinder 11 is poured (injected) through the nozzle 18 into the cavity 25 of the molds 23 and 24 in the mold closed state. The screw 12 continues to apply pressure to the molten material even after injecting the molten material into the cavity 25. The molds 23 and 24 are cooled while maintaining the state in which the pressure is applied to the molten material in the cavity 25.

While cooling the molds 23 and 24, the above-mentioned operation is performed in preparation for the next injection. Namely, a predetermined amount of molding material is supplied from the hopper 14 to the cylinder 11 through the opening 15, the molding material supplied into the cylinder 11 is melted while sending it forward by the rotation of the screw 12, and an amount of molten material required for the next injection is stored at the tip end (reservoir 17) of the cylinder 11. At this time, as described above, the molten material is stored in the reservoir, and the screw 12 moves backward due to the reaction thereof. The process of moving the screw 12 backward while sending the molten material forward such that the molten material can be injected is referred to as "measuring".

After the molds 23 and 24 are cooled to a temperature equal to or lower than the solidification temperature of the molten material in the cavity 25, the mold clamping apparatus 3 is operated to put the molds 23 and 24 into the mold open state, thereby taking out the molded product. The molded product is formed by solidifying the molten material in the cavity 25 of the molds 23 and 24.

Next, after the mold clamping apparatus 3 is operated to put the molds 23 and 24 into the mold closed state, as described above, the screw 12 is moved forward in the cylinder 11 without rotating, whereby the molten material stored in the reservoir 17 of the cylinder 11 is poured (injected) through the nozzle 18 into the cavity 25 of the molds 23 and 24 in the mold closed state.

By repeating this process, molded products with the same shape can be manufactured continuously. Therefore, by repeatedly operating the injection molding machine 1, molded products with the desired shape can be mass-produced.

Furthermore, when the measuring process is repeated, the amount of molding material in the hopper 14 gradually decreases. Therefore, when the amount of molding material in the hopper 14 decreases, the molding material is transported and supplied from the material supply apparatus 4 to the hopper 14. The material supply apparatus 4 will be described below.

### <Material Supply Apparatus>

As described above, the injection molding machine 1 according to the present embodiment is provided with the material supply apparatus 4 in addition to the injection apparatus 2 and the mold clamping apparatus 3. The material supply apparatus 4 is used to supply the molding material to the hopper 14 of the injection apparatus 2.

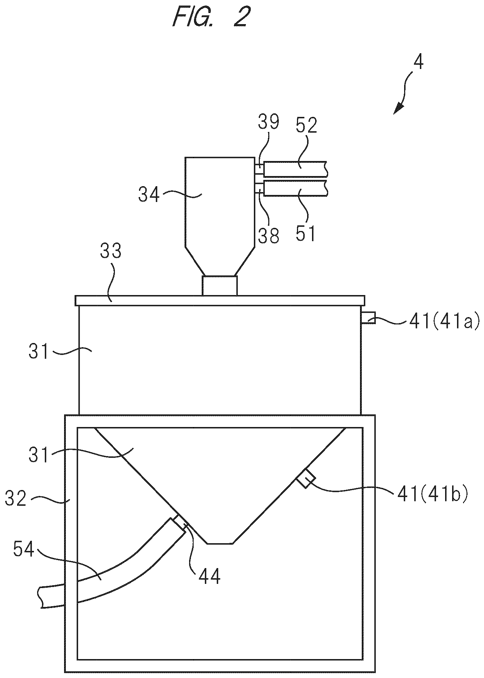

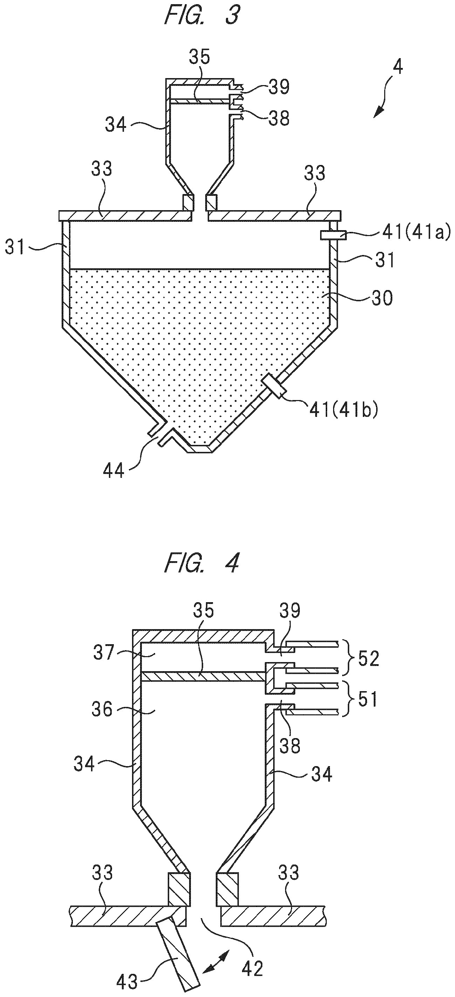

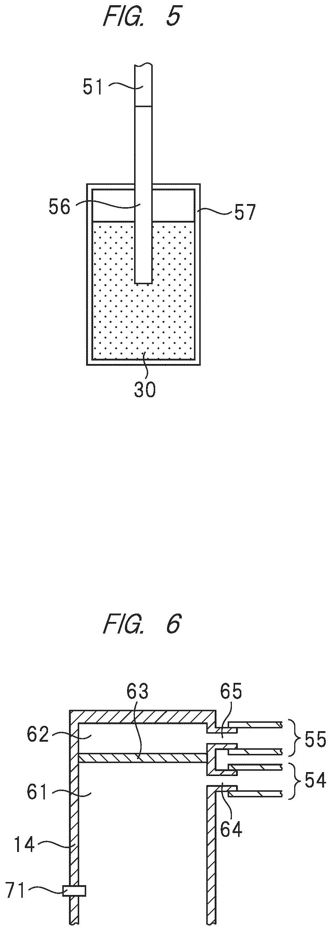

FIG. 2 is a side view of the material supply apparatus 4 and FIG. 3 is a cross-sectional view (side cross-sectional view) of the material supply apparatus 4. FIG. 4 is a partially enlarged cross-sectional view showing a part of the material supply apparatus 4 (around a hopper 34) in an enlarged manner. FIG. 5 is a cross-sectional view (side cross-sectional view) of a container 57 shown in FIG. 1. FIG. 6 is a partially enlarged cross-sectional view showing a part (upper part) of the hopper 14 of the injection apparatus 2 shown in FIG. 1 in an enlarged manner.

As shown in FIG. 1 to FIG. 4, the material supply apparatus 4 includes a tank (storage container, storage unit) 31 which is a container for storing the molding material, a stand (support stand) 32 which supports the tank 31, a lid (ceiling portion) 33 which constitutes an upper part of the tank 31, and the hopper 34 attached to the lid 33. In FIG. 1 and FIG. 3, for ease of understanding, the molding material stored in the tank 31 is indicated with dotted hatching and is denoted by a reference character 30.

The inside (internal space) of the hopper 34 is divided into an area (space) 36 and an area (space) 37 by a filter member 35 such as a wire mesh (see FIG. 4). Of the areas 36 and 37, the area 36 is located on the lower side and the area 37 is located on the upper side, and the filter member 35 is located at the boundary between the areas 36 and 37. The filter member 35 cannot transmit the molding material but can transmit air. Therefore, in the hopper 34, the molding material cannot move between the areas 36 and 37, but air can move therebetween. A sensor 41 is attached to the tank 31. The sensor 41 can detect information related to the amount of molding material 30 in the tank 31. For example, the sensor 41 can detect the position of the upper surface of the molding material 30 in the tank 31, and thus can detect the amount of the molding material in the tank 31.

The hopper 34 is connected to an opening 42 provided in the lid 33, and this opening 42 is provided with a damper (opening/closing mechanism) 43. The damper 43 can be switched between a closed state and an open state. When the damper 43 is in the open state, the opening 42 is not closed by the damper 43 and the opening 42 is open, so that the area 36 of the hopper 34 and the inside (internal space) of the tank 31 are connected via the opening 42. In this state, the molding material can move from the area 36 of the hopper 34 into the tank 31. On the other hand, when the damper 43 is in the closed state, the opening 42 is closed by the damper 43, so that the area 36 of the hopper 34 and the inside of the tank 31 are disconnected by the damper 43. In this state, the molding material cannot move from the area 36 of the hopper 34 into the tank 31.

A hose 51 and a hose 52 which are tubular members are connected to the hopper 34. One end of the hose (tubular member) 51 is connected to a material supply port (opening) 38 provided in the area 36 of the hopper 34, and the molding material can move from the hose 51 through the material supply port 38 to the area 36 of the hopper 34. Also, one end of the hose (tubular member) 52 is connected to an air intake port (opening) 39 provided in the area 37 of the hopper 34, and air can be taken into the hopper 34 through the hose 52 and the air intake port 39.

The other end of the hose 51 (the end opposite to the end connected to the hopper 34) is connected to a nozzle 56 such as a suction nozzle, and the nozzle 56 is inserted into a container (storage container, drum) 57 in which the molding material is stored (see FIG. 5) . Therefore, the container 57 and the hopper 34 are connected via the hose 51. In FIG. 1 and FIG. 5, for ease of understanding, the molding material stored in the container 57 is indicated with dotted hatching and is denoted by the reference character 30. More specifically, the container 57 is a drum. As can be seen from FIG. 5, the tip end of the nozzle 56 is inserted (buried) into the molding material 30 in the container 57. In this way, it is possible to transport the molding material 30 from the container 57 to the hopper 34 of the material supply apparatus 4 through the nozzle 56 and the hose 51.

The capacity (volume) of the tank 31 of the material supply apparatus 4 is larger than the capacity (volume) of the container 57. Namely, the maximum amount of molding material that can be stored in the tank 31 is larger than the maximum amount of molding material that can be stored in the container 57. Therefore, an amount of molding material larger than the maximum amount of molding material that can be stored in the container 57 can be stored in the tank 31. Also, the weight of the molding material is proportional to the volume of the molding material. Therefore, the maximum weight of the molding material that can be stored in the tank 31 is larger than the maximum weight of the molding material that can be stored in the container 57. For example, the capacity of the tank 31 can be at least twice (more preferably, about 3 to 5 times) larger than the capacity of the container 57.

The other end of the hose 52 (the end opposite to the end connected to the hopper 34) is connected to a switching valve (switching unit) 58 (see FIG. 1). Namely, the hopper 34 and the switching valve 58 are connected via the hose 52. In addition, a blower (blowing machine) 59 and the switching valve 58 are connected via a hose 53 which is a tubular member (see FIG. 1). Namely, one end of the hose (tubular member) 53 is connected to the switching valve 58, and the other end of the hose 53 (the end opposite to the end connected to the switching valve 58) is connected to the suction side of the blower 59.

The tank 31 of the material supply apparatus 4 and the hopper 14 of the injection apparatus 2 are connected via a hose 54 which is a tubular member (see FIG. 1). Namely, one end of the hose (tubular member) 54 is connected to a material discharge port (opening) 44 provided in the tank 31 (see FIG. 2 and FIG. 3), and the other end of the hose 54 (the end opposite to the end connected to the tank 31) is connected to a material supply port (opening) 64 provided in the hopper 14 (see FIG. 6). In this way, the molding material in the tank 31 can move from the material discharge port 44 to the hose 54, and thus the molding material can be transported from the tank 31 to the hopper 14 through the hose 54. The material discharge port 44 is provided at the lower part of the tank 31.

The hopper 14 of the injection apparatus 2 and the switching valve 58 are connected via a hose 55 which is a tubular member. Namely, one end of the hose (tubular member) 55 is connected to an air intake port (opening) 65 provided in the hopper 14, and the other end of the hose 55 (the end opposite to the end connected to the hopper 14) is connected to the switching valve 58.

Here, the connection relationship between the hopper 14 and the hoses 54 and 55 will be described with reference to FIG. 6. As shown in FIG. 6, the inside (internal space) of the hopper 14 has an area (space) 61 and an area (space) 62, and the material supply port 64 is provided in the area 61 and the air intake port 65 is provided in the area 62. One end of the hose 54 is connected to the material supply port 64. In this way, it is possible to supply the molding material to the area 61 of the hopper 14 through the hose 54 and the material supply port 64. Also, one end of the hose 55 is connected to the air intake port 65. In this way, it is possible to take air into the hopper 14 through the air intake port 65 and the hose 55. A filter member 63 such as a wire mesh is disposed at the boundary between the area 61 and the area 62. The filter member 63 cannot transmit the molding material but can transmit air. Of the areas 61 and 62, the area 61 is located on the lower side and the area 62 is located on the upper side. Therefore, in the hopper 14, the molding material cannot move between the area 61 and the area 62, but air can move therebetween. In addition, a sensor 71 is provided in the hopper 14. The sensor 71 can detect information related to the amount of molding material in the hopper 14. For example, the sensor 71 detects the position of the upper surface of the molding material in the hopper 14, and thus can detect whether or not the amount of molding material in the hopper 14 is equal to or larger than a reference value.

The switching valve 58 can be switched among a state in which the hose 53 is connected to the hose 55 (switching position A), a state in which the hose 53 is connected to the hose 52 (switching position C), and a state in which the hose 53 is not connected to either the hose 52 or the hose 55 (switching position B). In the following, the state of the switching valve 58 in which the hose 53 is connected to the hose 55 is referred to as the switching position A, the state of the switching valve 58 in which the hose 53 is not connected to either the hose 52 or the hose 55 is referred to as the switching position B, and the state of the switching valve 58 in which the hose 53 is connected to the hose 52 is referred to as the switching position C.

The control unit 5 provided in the injection molding machine 1 can control the switching valve 58 to switch the connection states of the hoses 52, 53, and 55 connected to the switching valve 58. The control unit 5 can also control the blower 59. The control unit 5 can also control the operation of the injection molding machine 1, but it is also possible to provide a control unit that controls the switching valve 58 and the blower 59 independently of the control unit that controls the operation of the injection molding machine 1. The control unit 5 includes, for example, a semiconductor device for control (processor) and a semiconductor device for storage (memory). The injection molding machine 1 or the material supply apparatus 4 also has an operation unit (operation panel) for performing various operations and displays, and the control unit 5 can perform various controls based on information input to the operation unit and programs and information stored in the control unit 5.

### <Operation of Material Supply Apparatus>

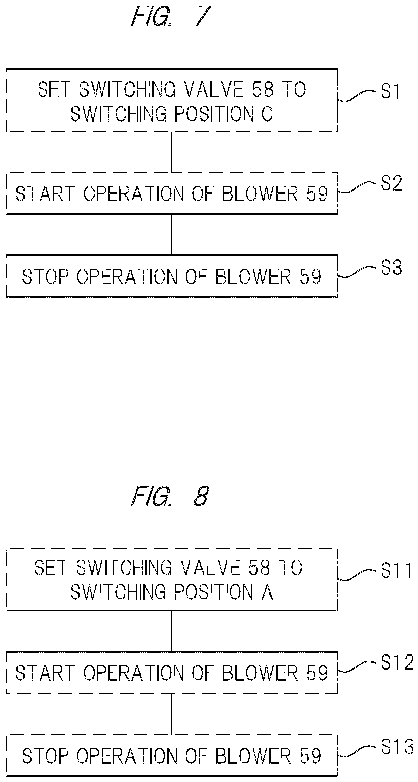

Next, an operation of the material supply apparatus 4 will be described. FIG. 7 and FIG. 8 are explanatory diagrams for the operation of the material supply apparatus 4.

First, an operation of transporting the molding material in the container 57 to the material supply apparatus 4 will be described. In the following, this operation is referred to as a first operation. FIG. 7 is an explanatory diagram for the first operation.

In the first operation, first, the switching valve 58 is set to the state in which the hose 53 and the hose 52 are connected (switching position C) (step S1 in FIG. 7). As a result, the suction side of the blower 59 is connected (coupled) to the hopper 34 of the material supply apparatus 4 via the hose 53, the switching valve 58, and the hose 52.

Then, the blower 59 starts the blowing operation, and the air in the hopper 34 is sucked by the blower 59 through the hose 53 and the hose 52 (step S2 in FIG. 7). In this way, negative pressure is created in the hopper 34 (areas 36, 37) and the damper 43 is put into a closed state. As a result, the molding material in the container 57 is sucked through the nozzle 56. This is because since the nozzle 56 is connected to the hopper 34 via the hose 51, when the blower 59 sucks the air in the hopper 34 though the hoses 53 and 52 and the damper 43 is put into a closed state, the suction force of the blower 59 is transmitted to the nozzle 56 through the hose 51. The molding material sucked from the nozzle 56 by the suction force of the blower 59 passes thorough the hose 51 together with air and is supplied into the area 36 of the hopper 34 from the material supply port 38 of the hopper 34. The air supplied into the area 36 of the hopper 34 together with the molding material moves to the area 37 of the hopper 34 through the filter member 35 by the suction force of the blower 59 and is sent and discharged from the blower 59 through the air intake port 39 of the hopper 34, the hose 52, the switching valve 58, and the hose 53. On the other hand, the molding material supplied into the area 36 of the hopper 34 together with air cannot pass through the filter member 35. This is because a plurality of openings (holes) of the filter member 35 have the size with which air can pass through them but the molding material cannot pass through them. Therefore, the molding material supplied into the area 36 of the hopper 34 from the material supply port 38 of the hopper 34 remains in the area 36. In this way, the molding material in the container 57 is transported and stored in the area 36 of the hopper 34.

Then, the blowing operation of the blower 59 is stopped, and the suction of air from the inside of the hopper 34 by the blower 59 is stopped (step S3 in FIG. 7). As a result, the nozzle 56 no longer sucks the molding material in the container 57, and the transport of the molding material from the container 57 to the hopper 34 is stopped. Furthermore, since the blowing operation of the blower 59 is stopped, the pressure in the hopper 34 (areas 36, 37) returns to atmospheric pressure, and the damper 43 is put into an open state. Accordingly, the molding material in the area 36 of the hopper 34 falls into the tank 31 through the opening 42 of the lid 33. In this way, the molding material in the area 36 of the hopper 34 moves into the tank 31 and is stored in the tank 31.

Therefore, by executing the step S2 and the step S3 in sequence, a predetermined amount of molding material is transported from the container 57 into the tank 31 of the material supply apparatus 4. In the step S2 and the step S3, the switching valve 58 remains set to the switching position C. By repeating the above-mentioned steps S2 and S3 as necessary, a desired amount of molding material can be transported from the container 57 and stored in the tank 31 of the material supply apparatus 4. The amount of molding material transported from the container 57 into the tank 31 of the material supply apparatus 4 increases as the number of times the steps S2 and S3 are repeated increases.

Next, the operation of transporting the molding material in the tank 31 of the material supply apparatus 4 into the hopper 14 of the injection apparatus 2 will be described. In the following, this operation is referred to as a second operation. FIG. 8 is an explanatory diagram for the second operation.

In the second operation, first, the switching valve 58 is set to the state in which the hose 53 and the hose 55 are connected (switching position A) (step S11 in FIG. 8). As a result, the suction side of the blower 59 is connected (coupled) to the hopper 14 via the hose 53, the switching valve 58, and the hose 55.

Then, the blower 59 starts the blowing operation, and the air in the hopper 14 is sucked by the blower 59 through the hose 53 and the hose 52 (step S12 in FIG. 8). In the second operation, the movement of air and molding material between the hopper 14 and the cylinder 11 of the injection apparatus 2 is blocked. As the blower 59 sucks the air inside the hopper 14 through the hose 53 and the hose 55, the molding material in the tank 31 is sucked from the material discharge port 44 of the tank 31 and transported into the hopper 14 through the hose 51. This is because since the material discharge port 44 of the tank 31 is connected to the hopper 14 via the hose 54, when the blower 59 sucks the air in the hopper 14 though the hoses 53 and 55, the suction force of the blower 59 is transmitted to the material discharge port 44 of the tank 31 through the hose 54. The molding material sucked from the material discharge port 44 of the tank 31 by the suction force of the blower 59 passes thorough the hose 54 together with air and is supplied into the area 61 of the hopper 14 from the material supply port 64 of the hopper 14. The air supplied into the area 61 of the hopper 14 together with the molding material moves to the area 62 of the hopper 14 through the filter member 63 by the suction force of the blower 59 and is sent and discharged from the blower 59 through the air intake port 65 of the hopper 14, the hose 55, the switching valve 58, and the hose 53. On the other hand, the molding material supplied into the area 61 of the hopper 14 together with air cannot pass through the filter member 63. This is because a plurality of openings (holes) of the filter member 63 have the size with which air can pass through them but the molding material cannot pass through them. Therefore, the molding material supplied from the material supply port 64 of the hopper 14 into the area 61 of the hopper 14 cannot move to the area 62 and the hose 55, and thus remains in the area 61 (therefore in the hopper 14) . In addition, since the molding material that has already been stored in the hopper 14 at the stage of starting the second operation also cannot pass through the filter member 63 and thus cannot move to the area 62 of the hopper 14, it cannot move from the hopper 14 to the hose 55 and remains in the hopper 14. In this way, the molding material in the tank 31 of the material supply apparatus 4 is transported and stored in the hopper 14 of the injection apparatus 2.

Then, the blowing operation of the blower 59 is stopped, and the suction of air from the hopper 14 by the blower 59 is stopped (step S13 in FIG. 8). As a result, the molding material in the tank 31 is no longer sucked into the hose 54 through the material discharge port 44, and the transport of the molding material from the tank 31 to the hopper 14 is stopped.

Note that, since the movement of air and molding material between the hopper 14 and the cylinder 11 of the injection apparatus 2 is blocked in the second operation, even if the transport of the molding material from the tank 31 to the hopper 14 stops, the molding material remains stored in the hopper 14. A predetermined amount of the molding material stored in the hopper 14 is supplied from the hopper 14 into the cylinder 11 in the above-mentioned measuring process.

Therefore, by executing the steps S11, S12, and S13, a desired amount of molding material can be transported from the tank 31 and stored in the hopper 14. While the step S12 is being executed, the switching valve 58 remains set to the switching position A. As the duration time of the step S12 described above becomes longer, the larger amount of molding material is transported from the tank 31 to the hopper 14. By continuing the step S12 for a required period of time, a desired amount of molding material can be transported from the tank 31 and stored in the hopper 14.

As described above, the first and second operations can be performed by controlling the switching valve 58 and the blower 59. Since the state of the switching valve 58 differs between the first operation and the second operation, the first operation and the second operation cannot be performed simultaneously. Namely, while the first operation is being performed, the second operation cannot be performed, and while the second operation is being performed, the first operation cannot be performed.

In addition, in the above-mentioned measuring process, it is desirable that the second operation is not performed when a predetermined amount of molding material is supplied from the hopper 14 into the cylinder 11. In other words, it is desirable to supply the molding material from the hopper 14 into the cylinder 11 in the state where the second operation is not performed. In this way, it is possible to prevent the supply of molding material from the hopper 14 into the cylinder 11 from being hindered by the suction force of the blower 59 generated in the second operation. Therefore, it is possible to prevent the amount of molding material supplied from the hopper 14 into the cylinder 11 from deviating from the planned feeding amount in the measuring process.

In addition, it is desirable that the first operation is performed to transport the molding material in the container 57 into the tank 31 of the material supply apparatus 4 when there is little need to transport the molding material from the tank 31 to the hopper 14 (for example, when a sufficient amount of molding material is stored in the hopper 14) . In this way, it is possible to increase the amount of molding material stored in the tank 31 of the material supply apparatus 4. In addition, it is desirable that the second operation is performed to transport the molding material from the tank 31 to the hopper 14 when there is high need to transport the molding material from the tank 31 to the hopper 14 (for example, when the amount of molding material in the hopper 14 becomes less than a reference value). In this way, it is possible to increase the amount of molding material in the hopper 14, and the molding material can be supplied from the hopper 14 to the cylinder 11 in the measuring process in the state where a sufficient amount of molding material is stored in the hopper 14.

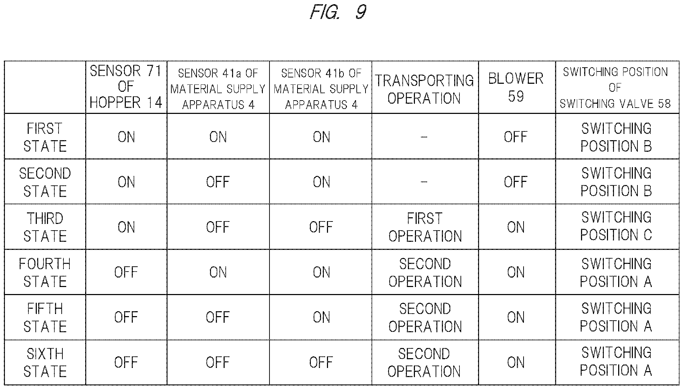

Next, an example of automatic control of the material supply apparatus 4 will be described with reference to FIG. 9. FIG. 9 is a table for describing an example of the automatic control of the material supply apparatus 4. The control unit 5 controls the switching valve 58 and the blower 59 based on the information detected by the sensor 41 (41a, 41b) of the material supply apparatus 4 and the sensor 71 of the hopper 14, whereby the automatic control of the material supply apparatus 4 is executed.

The sensor 41 provided in the material supply apparatus 4 includes a sensor (full sensor) 41a and a sensor (lower limit sensor) 41b. The sensor 41a can detect whether or not the tank 31 is full of the molding material. Here, the state where the amount of molding material in the tank 31 is full corresponds to the state where the tank 31 is almost filled with the molding material and the position of the upper surface of the molding material in the tank 31 has reached a predetermined reference position.

Further, the sensor 41b can detect whether or not the amount of molding material in the tank 31 is equal to or larger than an allowable lower limit value (hereinafter referred to as "lower limit value"). Here, the lower limit value is set to a level at which it is recommended to replenish the molding material in the tank 31 from the container 57 when the amount of molding material in the tank 31 falls below the lower limit value. Namely, the lower limit value is a level that triggers the first operation. The lower limit value is less than the amount of molding material when the tank is full. The lower limit value can also be considered as a reference value for the amount of molding material in the tank 31.

Specifically, the sensor 41a responds (ON) when the tank 31 is full of molding material, and the sensor 41a does not respond (OFF) when the tank 31 is not full of molding material. Furthermore, the sensor 41b responds (ON) when the amount of molding material in the tank 31 is equal to or larger than the lower limit value, and the sensor 41b does not respond (OFF) when the amount of molding material in the tank 31 is less than the lower limit value.

In the material supply apparatus 4, the mounting position of the sensor 41b is lower than the mounting position of the sensor 41a. For example, the sensor 41b can be provided on the side surface of the tank 31. Also, for example, the sensor 41a can be provided on the side surface of the tank 31 or on the lid 33. Alternatively, the sensor 41a can be provided near the connection portion between the tank 31 and the hopper 34.

The sensor 71 provided in the hopper 14 can detect information related to the amount of molding material in the hopper 14. For example, the sensor 71 detects the position of the upper surface of the molding material in the hopper 14, and thereby can detect whether or not the amount of molding material in the hopper 14 is equal to or larger than a reference value. Specifically, the sensor 71 responds (ON) when the amount of molding material in the hopper 14 is equal to or larger than the reference value, and the full sensor 71 does not respond (OFF) when the amount of molding material in the hopper 14 is less than the reference value. Here, the reference value of the amount of molding material in the hopper 14 is set to a level at which it is recommended to replenish the molding material in the hopper 14 from the tank 31 when the amount of molding material in the hopper 14 falls below the reference value. Namely, the reference value of the amount of molding material in the hopper 14 is the level that triggers the second operation. It is also possible to set a level close to full as the reference value.

The detection states of the sensors 41a and 41b provided in the material supply apparatus 4 and the sensor 71 provided in the hopper 14 of the injection apparatus 2 can be classified into six states (first to sixth states) in the table of FIG. 9. The control unit 5 controls the switching valve 58 and the blower 59 in accordance with each state.

In the first state shown in the table of FIG. 9, since the full sensor 71, the sensor 41a, and the sensor 41b all respond (ON), the control unit 5 judges that the amount of molding material in the hopper 14 is equal to or larger than the reference value and the amount of molding material in the tank 31 is full. In this case, there is no need to transport the molding material from the container 57 to the material supply apparatus 4 and transport the molding material from the tank 31 to the hopper 14. Therefore, in the first state, the control unit 5 switches the switching valve 58 to the switching position B, and keeps the blower 59 stopped without performing the blowing operation of the blower 59. In the first state shown in the table of FIG. 9, neither the first operation nor the second operation described above is performed.

In the second state shown in the table of FIG. 9, since the sensor 71 and the sensor 41b respond (ON) and the sensor 41a does not respond (OFF), the control unit 5 judges that the amount of molding material in the hopper 14 is equal to or larger than the reference value and the amount of molding material in the tank 31 is not full but is equal to or larger than the lower limit value. In this case, there is no need to transport the molding material from the container 57 to the material supply apparatus 4 and transport the molding material from the tank 31 to the hopper 14. Therefore, in the second state, the control unit 5 switches the switching valve 58 to the switching position B, and keeps the blower 59 stopped without performing the blowing operation of the blower 59. In the second state shown in the table of FIG. 9, neither the first operation nor the second operation described above is performed.

In the third state shown in the table of FIG. 9, since the sensor 71 responds (ON) and the sensors 41a and 41b do not respond (OFF), the control unit 5 judges that the amount of molding material in the hopper 14 is equal to or larger than the reference value and the amount of molding material in the tank 31 is less than the lower limit value. In this case, it is not necessary to transport the molding material from the tank 31 to the hopper 14, but it is desirable to transport the molding material from the container 57 to the material supply apparatus 4. Therefore, in the third state, the control unit 5 performs the first operation described above. Namely, in accordance with the first operation described above, the switching valve 58 is switched to the switching position C, and the blower 59 performs the blowing operation. In the third state shown in the table of FIG. 9, the above-mentioned first operation is performed, so that the molding material is transported from the container 57 to the tank 31 of the material supply apparatus 4 and stored in the tank 31.

In the fourth state shown in the table of FIG. 9, since the sensor 71 does not respond (OFF) and the sensors 41a and 41b respond (ON), the control unit 5 judges that the molding material in the hopper 14 is less than the reference value and the molding material in the tank 31 is full. In this case, it is not necessary to transport the molding material from the container 57 to the material supply apparatus 4, but it is desirable to transport the molding material from the tank 31 to the hopper 14. Therefore, in the fourth state, the control unit 5 performs the second operation described above. Namely, in accordance with the second operation described above, the switching valve 58 is switched to the switching position A, and the blower 59 performs the blowing operation. In the fourth state shown in the table of FIG. 9, the above-mentioned second operation is performed, and the molding material is transported from the tank 31 to the hopper 14 and stored in the hopper 14.

In the fifth state shown in the table of FIG. 9, since the sensors 71 and 41a do not respond (OFF) and the sensor 41b responds (ON), the control unit 5 judges that the molding material in the hopper 14 is less than the reference value and the molding material in the tank 31 is not full but is equal to or larger than the lower limit value. In this case, it is not necessary to transport the molding material from the container 57 to the material supply apparatus 4, but it is desirable to transport the molding material from the tank 31 to the hopper 14. Therefore, in the fifth state, the control unit 5 performs the second operation described above. Namely, in accordance with the second operation described above, the switching valve 58 is switched to the switching position A, and the blower 59 performs the blowing operation. In the fifth state shown in the table of FIG. 9, the second operation described above is performed, and the molding material is transported from the tank 31 to the hopper 14 and stored in the hopper 14.

In the sixth state shown in the table of FIG. 9, since the sensor 71, the sensor 41a, and the sensor 41b all do not respond (OFF), the control unit 5 judges that the amount of molding material in the hopper 14 is less than the reference value and the amount of molding material in the tank 31 is less than the lower limit value. In this case, it is desirable to transport both the molding material from the container 57 to the material supply apparatus 4 and the molding material from the tank 31 to the hopper 14, but since it is not possible to perform both simultaneously, priority is given to the transport of the molding material from the tank 31 to the hopper 14. This is because there is a risk that the predetermined amount of molding material cannot be supplied from the hopper 14 into the cylinder 11 in the above-mentioned measuring process and the measuring process has to be temporarily stopped if the amount of molding material in the hopper 14 is insufficient. This leads to the reduction in the operating rate of the injection molding machine 1, and can be a factor in decreasing the throughput in the manufacture of molded products using the injection molding machine 1. Therefore, when it is judged from the detection result of the sensor 71 that the amount of molding material in the hopper 14 is less than the reference value, it is desirable to give priority to the second operation over the first operation. Therefore, in the sixth state, the control unit 5 performs the second operation described above. Namely, in accordance with the second operation described above, the switching valve 58 is switched to the switching position A, and the blower 59 performs the blowing operation. In the sixth state shown in the table of FIG. 9, the second operation described above is performed, and the molding material is transported from the tank 31 to the hopper 14 and stored in the hopper 14.

In addition, since the capacity of the tank 31 is made larger than the capacity of the container 57 in the present embodiment, the lower limit value of the amount of molding material in the tank 31 can be set larger to some extent. By setting the lower limit value of the molding material in the tank 31 to the amount with a margin so as not to interfere with the second operation, the problem (such as the tank 31 getting empty) does not occur during the transport of the molding material from the tank 31 to the hopper 14 even if the priority is given to the second operation over the first operation when the sixth state occurs.

The amount of molding material in the tank 31 and the amount of molding material in the hopper 14 are checked (detected) by the sensor 41 (here, sensors 41a and 41b) provided in the material supply apparatus 4 and the sensor 71 provided in the hopper 14 of the injection apparatus 2, and the control unit 5 can automatically control the switching valve 58 and the blower 59 according to the result (any of the first to sixth states). In this way, the first operation or the second operation is automatically performed in accordance with the amount of molding material in the tank 31 and the amount of molding material in the hopper 14, and it is thus possible to appropriately maintain the amount of molding material in the tank 31 and the amount of molding material in the hopper 14.

Also, instead of the automatic control, the first operation or the second operation can be performed at any timing by, for example, manually operating a button or a keyboard. For example, after the manufacture of molded products by the injection molding machine 1 is completed, the first operation can be performed to fill the tank 31 with the molding material in preparation for the next operation of the injection molding machine 1. Further, it is also possible to perform the first operation to fill the tank 31 with the molding material at the preparation stage for starting the manufacture of molded products by the injection molding machine 1.

Furthermore, since the amount of molding material in the hopper 14 is considered to be equal to or larger than the reference value and the amount of molding material in the tank 31 is considered to be less than the lower limit value in the above-mentioned third state, the above-mentioned first operation is performed to transport the molding material from the container 57 to the material supply apparatus 4. In the first operation described above, the amount of molding material in the tank 31 increases every time the steps S2 and S3 described above are repeated. Therefore, the steps S2 and S3 described above can be repeated until the amount of molding material in the tank 31 is full, that is, until the sensor 41a responds (ON), and the first operation can be ended when the sensor 41a responds (ON). In this way, the amount of molding material in the tank 31 is less than the lower limit value before the start of the first operation, but the amount of molding material in the tank 31 is full at the time when the first operation is ended.

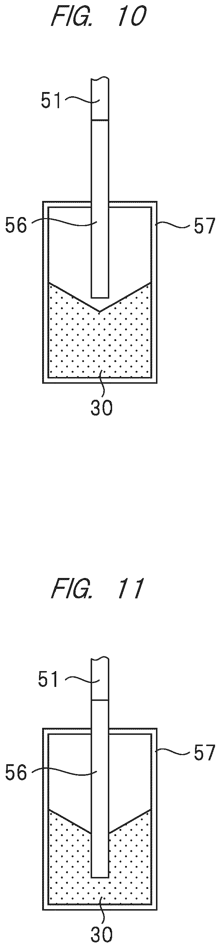

However, if the sensor 41a remains unresponsive (OFF) (that is, if the amount of molding material in the tank 31 of the material supply apparatus 4 does not become full) even after repeating the steps S2 and S3 described above several cycles, there is a possibility that the molding material is not properly transported from the container 57 to the tank 31 of the material supply apparatus 4. Therefore, if the sensor 41a remains unresponsive (OFF) after the first operation is started and the steps S2 and S3 described above are repeated a predetermined number of times (that is, if the amount of molding material in the tank 31 does not become full), the control unit 5 can issue a warning (for example, by displaying a warning on a display device). In that case, the manager of the injection molding machine 1 can check the state of the transport of the molding material from the container 57 to the material supply apparatus 4. For example, the manager visually checks the inside of the container 57. FIG. 10 and FIG. 11 are explanatory diagrams (cross-sectional views) showing the state in the container 57.

FIG. 5 mentioned above corresponds to the case where the amount of molding material in the container 57 is large. In FIG. 5, the tip end of the nozzle 56 is inserted (buried) in the molding material 30 stored in the container 57, so that the molding material can be properly sucked from the nozzle 56 in the above-mentioned step S2, and the molding material can be appropriately transported from the container 57 to the hopper 34 of the material supply apparatus 4 through the hose 51. However, as the transport of the molding material from the container 57 to the material supply apparatus 4 progresses, the amount of molding material in the container 57 gradually decreases. FIG. 10 corresponds to the case where the amount of molding material in the container 57 decreases as the transport of the molding material from the container 57 to the material supply apparatus 4 progresses. When the amount of molding material in the container 57 decreases, the tip end of the nozzle 56 is no longer located in the molding material 30 stored in the container 57 as shown in FIG. 10, and there is a risk that the tip end of the nozzle 56 is separated from the molding material 30 in the container 57. In such a situation, it becomes difficult to suck the molding material 30 from the nozzle 56 in the above-mentioned step S2, and it becomes difficult to transport the molding material 30 from the container 57 to the hopper 34 through the hose 51. When such a situation occurs, even if the above-mentioned steps S2 and S3 are repeated a predetermined number of times, the sensor 41a remains unresponsive (OFF), and the control unit 5 can issue a warning. In that case, the manager of the injection molding machine 1 visually checks the inside of the container 57, and inserts the tip end of the nozzle 56 into the molding material 30 stored in the container 57 as shown in FIG. 11 if the situation like that shown in FIG. 10 occurs. As a result, the tip end of the nozzle 56 is inserted (buried) in the molding material 30 stored in the container 57. Thereafter, the molding material can be properly sucked from the nozzle 56 by resuming the step S2, and the molding material can be appropriately transported from the container 57 to the hopper 34 through the hose 51.

Also, by checking the state inside the container 57 as appropriate other than during the first operation, the tip end of the nozzle 56 can be inserted into the molding material stored in the container 57 as shown in FIG. 11 if the situation like that shown in FIG. 10 occurs.

In the present embodiment, the hose 54 is connected to the lower part of the tank 31, and thus the material discharge port 44 of the tank 31 to which the hose 54 is connected is also provided at the lower part of the tank 31. Therefore, even when the amount of molding material in the tank 31 decreases, the molding material can be properly sucked from the material discharge port 44. Accordingly, even when the amount of molding material in the tank 31 decreases, it is possible to reliably prevent the occurrence of the problem (such as the improper transport of molding material from the tank 31 to the hopper 14) during the second operation.

Further, although the case where the sensors 41a and 41b are provided in the material supply apparatus 4 has been described here, as another embodiment, a position sensor capable of detecting the position of the upper surface of the molding material that changes in the tank 31 can also be provided as the sensor 41 instead of the sensors 41a and 41b. In this case, the amount of molding material in the tank 31 can be judged by detecting the position of the upper surface of the molding material in the tank 31 with the position sensor. For example, by detecting the position of the upper surface of the molding material in the tank 31 with the position sensor, it is possible to judge whether the amount of molding material in the tank 31 is full, not full but larger than the lower limit value, or less than the lower limit value. By combining the result with the detection result of the sensor 71 provided in the hopper 14, it is possible to judge which of the above-mentioned first to sixth states the detection state of the sensors is in. As the position sensor, for example, a reflective sensor can be used, and it can be provided on the lid 33 constituting the upper part of the tank 31 or the like.

Furthermore, since the capacity of the tank 31 is larger than the capacity of the container 57, when the first operation is performed to transport the molding material from the container 57 to the tank 31 of the material supply apparatus 4, there is a risk that all of the molding material in the container 57 may be transported to the tank 31 of the material supply apparatus 4 and the molding material in the container 57 gets empty. In that case, the nozzle 56 is removed from the empty container 57, and then the nozzle 56 is inserted into another container 57 in which the molding material is stored. In this way, the molding material can be transported from another container 57 in which the molding material is stored to the material supply apparatus 4 through the nozzle 56 and the hose 51.

### <Background of Study>

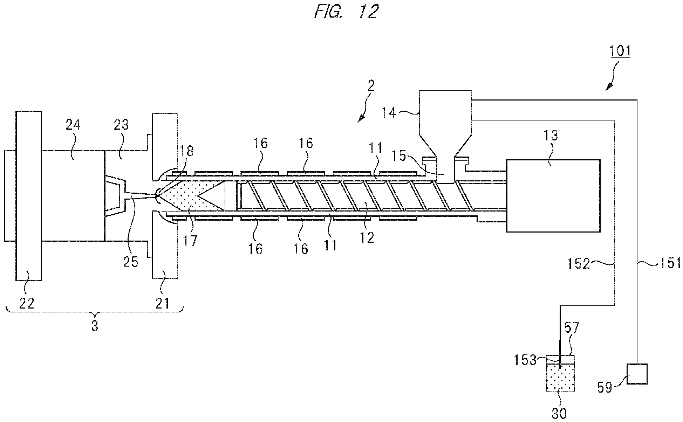

FIG. 12 is a schematic diagram showing a general configuration of an injection molding machine 101 according to a studied example studied by the inventor of this application, and corresponds to FIG. 1 above.

The injection molding machine 101 according to the studied example shown in FIG. 12 does not include the material supply apparatus 4 and the switching valve 58. In the injection molding machine 101 according to the studied example shown in FIG. 12, the hopper 14 of the injection apparatus 2 and the blower 59 are connected via a hose 151, and the hopper 14 of the injection apparatus 2 and the container 57 in which the molding material 30 is stored are connected via a hose 152. A nozzle 153 such as a suction nozzle is connected to the end of the hose 151, and the tip end of the nozzle 153 is inserted into the molding material 30 in the container 57.

In the case of the studied example shown in FIG. 12, the molding material is supplied to the hopper 14 of the injection apparatus 2 by transporting the molding material in the container 57 to the hopper 14 of the injection apparatus 2 through the nozzle 153 and the hose 152. Specifically, when the blower 59 starts the blowing operation, the suction force of the blower 59 is transmitted to the hose 151, the hopper 14, and the hose 152, so that the molding material 30 in the container 57 is sucked from the nozzle 153 and transported through the hose 152 to the hopper 14 of the injection apparatus 2 and stored in the hopper 14.

However, according to the study by the inventor of this application, it has been found that the following problem may occur in the case of the studied example shown in FIG. 12.

Namely, once all of the molding material in the container 57 has been transported to the hopper 14 of the injection apparatus 2, the empty container 57 must be replaced with another container 57 in which the molding material is stored, and the nozzle 153 must be inserted into that container 57. During the replacement work of the container 57, the molding material cannot be transported to the hopper 14 of the injection apparatus 2. Therefore, there is a risk that the molding material in the hopper 14 of the injection apparatus 2 gets empty during the replacement work of the container 57, and when the molding material in the hopper 14 of the injection apparatus 2 gets empty, the injection molding machine 101 must be put into a standby state. This leads to the reduction in the operating rate of the injection molding machine 101 and decreases the throughput of molded products manufactured using the injection molding machine 101.

Therefore, in order to reduce the frequency of replacing the container 57, it is conceivable to further increase the capacity of the container 57 to increase the amount of molding material stored in the container 57. However, in this case, the container 57 in which a large amount of molding material is stored becomes heavy and difficult to carry, resulting in the further reduction in the efficiency of various operations. For this reason, there is a limit to increasing the amount of molding material stored in the container 57 by increasing the capacity of the container 57. In particular, since the density of the molding material is high when metal chips are used as the molding material, it is difficult to increase the amount of molding material stored in the container 57 by further increasing the capacity of the container 57.

In addition, as the transport of the molding material from the container 57 to the hopper 14 of the injection apparatus 2 through the nozzle 153 and the hose 152 progresses, the amount of molding material in the container 57 gradually decreases. When the amount of molding material in the container 57 decreases, the tip end of the nozzle 153 is separated from the molding material 30 in the container 57 as described in relation to FIG. 10 above, and the molding material cannot be properly sucked from the nozzle 153. When such a situation occurs, it is necessary to visually check the inside of the container 57 and insert the tip end of the nozzle 153 into the molding material 30 stored in the container 57. However, the molding material cannot be transported from the container 57 to the hopper 14 of the injection apparatus 2 during such checking and inserting operations. This can also be a cause in decreasing the throughput of molded products manufactured using the injection molding machine 101.

### <Main Features and Effects>

One of the main features of the present embodiment is that the material supply apparatus 4 for supplying the molding material to the hopper 14 of the injection apparatus 2 is used. Namely, the tank 31 of the material supply apparatus 4 is connected to the hopper 14 of the injection apparatus 2 via a tubular member (here, hose 54), and the material supply apparatus 4 is connected to the container 57 in which the molding material is stored via a tubular member (here, hose 51), thereby making it possible to transport the molding material from the container 57 to the material supply apparatus 4 and to transport the molding material from the tank 31 of the material supply apparatus 4 to the hopper 14 of the injection apparatus 2.

In the present embodiment, instead of transporting the molding material directly from the container 57 in which the molding material is stored to the hopper 14 of the injection apparatus 2, the molding material is transported from the container 57 in which the molding material is stored to the material supply apparatus 4 such that the molding material is temporarily stored in the tank 31 of the material supply apparatus 4, and then the molding material can be transported from the tank 31 of the material supply apparatus 4 to the hopper 14 of the injection apparatus 2. In this way, even if all of the molding material in the container 57 is transported to the tank 31 of the material supply apparatus 4 and it becomes necessary to replace the empty container 57 with another container 57 in which the molding material is stored, it is possible to transport the molding material from the tank 31 of the material supply apparatus 4 to the hopper 14 of the injection apparatus 2 during the replacement work of the container 57 because the tank 31 of the material supply apparatus 4 is not empty. Therefore, even when the container 57 gets empty, the injection molding machine 1 does not need to be put into a standby state. As a result, the operating efficiency of the injection molding machine 1 can be improved, and the throughput of molded products manufactured using the injection molding machine 1 can be improved.

Also, as the transport of the molding material from the container 57 to the material supply apparatus 4 progresses, the amount of molding material in the container 57 gradually decreases and there is a risk that the tip end of the nozzle 56 is separated from the molding material 30 in the container 57 as described in relation to FIG. 10 above and the molding material cannot be properly sucked from the nozzle 56. When such a situation occurs, it is necessary to visually check the inside of the container 57 and insert the tip end of the nozzle 56 into the molding material 30 stored in the container 57. However, even when such checking and inserting operations are being performed, the molding material can be transported from the tank 31 of the material supply apparatus 4 to the hopper 14 of the injection apparatus 2. From this perspective as well, the operating efficiency of the injection molding machine 1 can be improved, and the throughput of molded products manufactured using the injection molding machine 1 can be improved.

In addition, the capacity of the tank 31 of the material supply apparatus 4 is preferably larger than the capacity of the container 57. In this way, an amount of molding material larger than the amount of molding material that can be stored in the container 57 can be stored in the tank 31 of the material supply apparatus 4. Therefore, the molding material can be transported from the tank 31 to the hopper 14 in the state where a necessary and sufficient amount of molding material is stored in the tank 31. Accordingly, it is possible to prevent the molding material in the tank 31 from being empty while the molding material is being transported from the tank 31 to the hopper 14. As a result, a proper amount of molding material can be transported from the tank 31 to the hopper 14 at an appropriate timing. Therefore, the operating efficiency of the injection molding machine 1 can be improved, and the throughput of molded products manufactured using the injection molding machine 1 can be improved.

Further, the tubular member (here, hose 54) that connects the hopper 14 of the injection apparatus 2 and the tank 31 of the material supply apparatus 4 is preferably connected to the lower part of the tank 31 of the material supply apparatus 4. In this way, even when the amount of molding material in the tank 31 decreases, the molding material in the tank 31 can be properly sucked into the hose 54. Therefore, even when the molding material in the tank 31 decreases, the molding material can be properly transported from the tank 31 to the hopper 14.

Furthermore, in the present embodiment, the tank 31 of the material supply apparatus 4 is connected to the hopper 14 of the injection apparatus 2 via the hose 54, the hopper 34 of the material supply apparatus 4 is connected to the container 57 via the hose 51, the hopper 34 of the material supply apparatus 4 is connected to the switching valve 58 via the hose 52, the hopper 14 of the injection apparatus 2 is connected to the switching valve 58 via the hose 55, and the blower 59 is connected to the switching valve 58 via the hose 53. The switching valve 58 can be switched among the state in which the hose 53 is connected to the hose 52, the state in which the hose 53 is connected to the hose 55, and the state in which the hose 53 is not connected to either the hose 52 or the hose 55. In this way, it is possible to selectively transport the molding material from the container 57 to the material supply apparatus 4 and from the tank 31 of the material supply apparatus 4 to the hopper 14 of the injection apparatus 2 by controlling the switching valve 58 and the blower 59. Specifically, the molding material can be transported from the container 57 to the material supply apparatus 4 by operating the blower 59 when the switching valve 58 is set to the state in which the hose 53 is connected to the hose 52. Also, the molding material can be transported from the tank 31 to the hopper 14 by operating the blower 59 when the switching valve 58 is set to the state in which the hose 53 is connected to the hose 55.

Moreover, in the present embodiment, the material supply apparatus 4 is provided with the sensor 41 that detects information related to the amount of molding material in the tank 31, and the hopper 14 of the injection apparatus 2 is provided with the sensor 71 that detects information related to the amount of molding material in the hopper 14. The control unit 5 controls the switching valve 58 and the blower 59 based on the information detected by the sensors 41 and 71. In this way, the molding material can be transported from the container 57 to the material supply apparatus 4 or from the tank 31 to the hopper 14 at an appropriate timing based on the amount of molding material in the tank 31 and the amount of molding material in the hopper 14.

### (Second Embodiment)

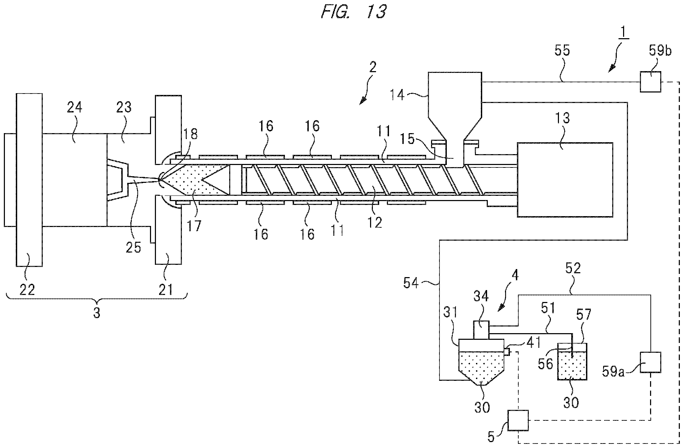

FIG. 13 is a schematic diagram showing a general configuration of an injection molding machine 1 according to the second embodiment, and corresponds to FIG. 1 of the first embodiment described above.

The differences between the injection molding machine 1 according to the second embodiment and the injection molding machine 1 according to the first embodiment described above will be described below.

One blower 59 is used in the first embodiment described above, but two blowers 59a and 59b are used in the second embodiment as shown in FIG. 13. The blower 59a is used to transport the molding material from the container 57 to the material supply apparatus 4, and the blower 59b is used to transport the molding material from the tank 31 of the material supply apparatus 4 to the hopper 14 of the injection apparatus 2. Also, the switching valve 58 is not used in the second embodiment.

In reflection of the above, in the second embodiment, one end of the hose 52 (the end opposite to the end connected to the hopper 34) is connected to the suction side of the blower 59b instead of to the switching valve 58 described above. Also, one end of the hose 52 (the end opposite to the end connected to the hopper 14) is connected to the suction side of the blower 59b instead of to the switching valve 58 described above. The control unit 5 can control the blowers 59a and 59b.

The other configurations of the injection molding machine 1 according to the second embodiment are substantially the same as those of the injection molding machine 1 according to the first embodiment, and thus the repetitive description thereof will be omitted here.

Also, in the second embodiment, the step S1 in FIG. 7 above is not necessary when the first operation described above is performed, and the blowing operation of the blower 59a instead of the blower 59 is started in the step S2 in FIG. 7 above. Then, the blowing operation of the blower 59a instead of the blower 59 is stopped in the step S3 in FIG. 7 above. Further, in the second embodiment, the step S11 in FIG. 8 above is not necessary when the second operation described above is performed, and the blowing operation of the blower 59b instead of the blower 59 is started in the step S12 in FIG. 8 above. Then, the blowing operation of the blower 59b instead of the blower 59 is stopped in the step S13 in FIG. 8 above. Other than these, the operation of the material supply apparatus 4 according to the second embodiment is substantially the same as that of the material supply apparatus 4 according to the first embodiment.

In the second embodiment, the tank 31 of the material supply apparatus 4 is connected to the hopper 14 of the injection apparatus 2 via the hose 54, the hopper 34 of the material supply apparatus 4 is connected to the container 57 via the hose 51, the hopper 34 of the material supply apparatus 4 is connected to the blower 59a via the hose 52, and the hopper 14 of the injection apparatus 2 is connected to the blower 59b via the hose 55. In this way, it is possible to selectively transport the molding material from the container 57 to the material supply apparatus 4 and from the tank 31 to the hopper 14 by controlling the switching valve 58 and the blowers 59a and 59b. Specifically, the molding material can be transported from the container 57 to the material supply apparatus 4 through the hose 51 by operating the blower 59a. Also, the molding material can be transported from the tank 31 to the hopper 14 through the hose 54 by operating the blower 59b.

Note that two blowers are required in the second embodiment, whereas only one blower is required in the first embodiment. Therefore, the required number of blowers can be reduced in the first embodiment described above.

In the foregoing, the invention made by the inventor of this application has been specifically described based on the embodiments. However, it is needless to say that the present invention is not limited to the above-described embodiments and various modifications can be made within the range not departing from the gist thereof.

### REFERENCE SIGNS LIST

1 injection molding machine
2 injection apparatus
3 mold clamping apparatus
4 material supply apparatus
5 control unit
11 cylinder
12 screw
13 driving mechanism
14 hopper
15 opening
16 heater
17 reservoir
18 nozzle
21 fixed platen
22 movable platen
23, 24 mold
30 molding material
31 tank
32 stand
33 lid
34 hopper
35 filter member
36 area
37 area
38 material supply port
39 air intake port
41, 41a, 41b sensor
42 opening
43 damper
44 material discharge port
51, 52, 53, 54, 55 hose
56 nozzle
57 container
58 switching valve
59 blower
61, 62 area
63 filter member
64 material supply port
65 air intake port
71 sensor
101 injection molding machine
151, 152 hose
153 nozzle

## Claims

1. An injection molding machine comprising:
a cylinder;
a first hopper attached to the cylinder and configured to supply a molding material into the cylinder;
a screw built in the cylinder; and
a material supply apparatus configured to supply the molding material to the first hopper,
wherein the material supply apparatus includes a first container configured to store the molding material,
wherein the first container of the material supply apparatus is connected to the first hopper via a first tubular member,
wherein the material supply apparatus is connected to a second container configured to store the molding material via a second tubular member, and
wherein the molding material can be transported from the second container to the material supply apparatus through the second tubular member, and the molding material can be transported from the first container of the material supply apparatus to the first hopper through the first tubular member.

2. The injection molding machine according to claim 1,
wherein a capacity of the first container is larger than a capacity of the second container.

3. The injection molding machine according to claim 2,
wherein the first tubular member is connected to a lower part of the first container.

4. The injection molding machine according to claim 2,
wherein the material supply apparatus further includes a second hopper attached to the first container and configured to supply the molding material into the first container,
wherein the second hopper is connected to the second container via the second tubular member,
wherein the second hopper is connected to a switching unit via a third tubular member,
wherein the first hopper is connected to the switching unit via a fourth tubular member,
wherein the switching unit is connected to a blower via a fifth tubular member, and
wherein the switching unit can be switched among a first connection state in which the fifth tubular member is connected to the third tubular member, a second connection state in which the fifth tubular member is connected to the fourth tubular member, and a third connection state in which the fifth tubular member is not connected to either the third tubular member or the fourth tubular member.

5. The injection molding machine according to claim 4,
wherein the molding material in the second container can be transported to the second hopper through the second tubular member by operating the blower when the switching unit is set to the first connection state, and
wherein the molding material in the first container can be transported to the first hopper through the first tubular member by operating the blower when the switching unit is set to the second connection state.

6. The injection molding machine according to claim 4, further comprising:
a control unit configured to control the switching unit and the blower;
a first sensor configured to detect information related to an amount of the molding material in the first container; and
a second sensor configured to detect information related to an amount of the molding material in the first hopper,
wherein the control unit control the switching unit and the blower based on the information detected by the first sensor and the second sensor.

7. The injection molding machine according to claim 6,
wherein the control unit controls the switching unit and the blower to transport the molding material in the second container to the second hopper through the second tubular member when the control unit judges that the amount of molding material in the first container is less than a first reference value based on the information detected by the first sensor.

8. The injection molding machine according to claim 6,
wherein the control unit controls the switching unit and the blower to transport the molding material in the first container to the first hopper through the first tubular member when the control unit judges that the amount of molding material in the first hopper is less than a second reference value based on the information detected by the second sensor.

9. The injection molding machine according to claim 4,
wherein the second hopper includes a first area to which the second tubular member is connected, a second area to which the third tubular member is connected, and a first filter member disposed between the first area and the second area, and
wherein the first filter member can transmit air but cannot transmit the molding material.

10. The injection molding machine according to claim 9,
wherein the first hopper includes a third area to which the first tubular member is connected, a fourth area to which the fourth tubular member is connected, and a second filter member disposed between the third area and the fourth area, and
wherein the second filter member can transmit air but cannot transmit the molding material.

11. The injection molding machine according to claim 2,
wherein the material supply apparatus further includes a second hopper attached to the first container and configured to supply the molding material into the first container,
wherein the second hopper is connected to the second container via the second tubular member,
wherein the second hopper is connected to a first blower via a third tubular member, and
wherein the first hopper is connected to a second blower via a fourth tubular member.

12. The injection molding machine according to claim 11,
wherein the molding material in the second container can be transported to the second hopper through the second tubular member by operating the first blower, and
wherein the molding material in the first container can be transported to the first hopper through the first tubular member by operating the second blower.

13. A material supply apparatus for supplying a molding material to a first hopper provided in an injection molding machine, the material supply apparatus comprising:
a first container configured to store the molding material; and
a second hopper attached to the first container and configured to supply the molding material into the first container,
wherein the first hopper has a function to supply the molding material into a cylinder provided in the injection molding machine,
wherein the first container is connected to the first hopper via a first tubular member,
wherein the second hopper is connected to a second container in which the molding material is stored via a second tubular member, and
wherein the molding material can be transported from the second container to the second hopper through the second tubular member, and the molding material can be transported from the first container of the material supply apparatus to the first hopper through the first tubular member.

14. The material supply apparatus according to claim 13,
wherein a capacity of the first container is larger than a capacity of the second container.

15. The material supply apparatus according to claim 14,
wherein the first tubular member is connected to a lower part of the first container.

16. The material supply apparatus according to claim 15,
wherein the second hopper is connected to a switching unit via a third tubular member,
wherein the first hopper is connected to the switching unit via a fourth tubular member,
wherein the switching unit is connected to a blower via a fifth tubular member, and
wherein the switching unit can be switched among a first connection state in which the fifth tubular member is connected to the third tubular member, a second connection state in which the fifth tubular member is connected to the fourth tubular member, and a third connection state in which the fifth tubular member is not connected to either the third tubular member or the fourth tubular member.

17. The material supply apparatus according to claim 15,
wherein the second hopper is connected to a first blower via a third tubular member, and
wherein the first hopper is connected to a second blower via a fourth tubular member.
